## Europäisches Patentamt
## European Patent Office
## Office européen des brevets

(19)

(11) Veröffentlichungsnummer: **0 064 571**
**B1**

(12)

# EUROPÄISCHE PATENTSCHRIFT

(45) Veröffentlichungstag der Patentschrift:
23.01.85

(21) Anmeldenummer: 81103685.4

(22) Anmeldetag: 13.05.81

(51) Int. Cl.⁴: **B 66 D 3/02,** F 16 G 11/10,
F 16 G 11/12

(54) Vorrichtung zum Einklemmen und/oder Längsbewegen eines langgestreckten Zugmittels.

(43) Veröffentlichungstag der Anmeldung:
17.11.82 Patentblatt 82/46

(45) Bekanntmachung des Hinweises auf die Patenterteilung:
23.01.85 Patentblatt 85/4

(84) Benannte Vertragsstaaten:
CH DE FR GB IT LI NL SE

(56) Entgegenhaltungen:
DE - A - 2 045 501
DE - A - 2 260 623
DE - A - 2 533 469
FR - A - 1 489 029

(73) Patentinhaber: Secalt S.A., 1, Rue du Fort Dumoulin,
Luxembourg-Pulvermuhl (LU)

(72) Erfinder: Guido, Gortan, 7, Rue de l'Ecole, Itzig (LU)

(74) Vertreter: Buschhoff, Josef, Dipl.-Ing. et al,
Patentanwälte Dipl.-Ing. Buschhoff Dipl.-Ing. Hennicke,
Dipl.-Ing. Vollbach
Kaiser-Wilhelm-Ring 24 Postfach 190 408,
D-5000 Köln 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Vorrichtung zum Einklemmen und/oder Längsbewegen eines langgestreckten Zugmittels, insbesondere eines Drahtseiles oder einer Stange, gegenüber dem Gehäuse oder Rahmen eines Hebezeuges od. dgl. mit mindestens einer ersten Klemmbacke und mit mindestens einer zweiten Klemmbacke, die auf einander gegenüberliegenden Seiten des Zugmittels angeordnet und mit mindestens einem Klemmhebel quer zur Längsrichtung des Zugmittels gegeneinander bewegbar sind, welcher an einem Klemmschlüssel angreift, der sich gegen beide Klemmbacken abstützt und in mindestens einer Klemmbacke drehbar ist.

Klemmvorrichtungen dieser Art werden in Handhebezeugen verwendet, mit denen ein durchlaufendes Drahtseil, das an einer Last befestigt ist, gezogen, nachgelassen oder unbeweglich gehalten werden kann.

Es ist eine Klemmvorrichtung für solche Zug- oder Hubgeräte bekannt (FR-A-1 489 029), bei der die Klemmschlüssel Formstücke sind, die den Querschnitt von zwei längs eines Durchmessers seitlich gegeneinander versetzten Halbzylindern haben, die auf einem Teil ihres Durchmessers einstückig miteinander verbunden sind und mit einem Teil ihrer Durchmesserfläche über den Zylinderumfang des benachbarten Halbzylinders vorstehen. Jedem Klemmbackenpaar sind jeweils zwei Klemmschlüssel zugeordnet, die mit ihren Enden in entsprechend geformten Ausnehmungen von auf beiden Seiten der Klemmbacken angeordneten Klemmhebeln sitzen und mit ihrer einen Zylinderhälfte in eine teilzylindrische Ausnehmung der ersten Klemmbacke und mit ihrer anderen Zylinderhälfte in teilzylindrische Ausnehmungen der zweiten Klemmbacke drücken, so daß beide Klemmbacken zusammengepreßt werden und das Seil zwischen sich einklemmen, wenn die Klemmhebel in Zugrichtung verschwenkt werden.

Da sich die Klemmschlüssel um eine zwischen den Längsachsen der Halbzylinder liegende Mittelachse, also exzentrisch zu dieser drehen, vollführen sie außer der Drehbewegung auch eine Schwenkbewegung und verschieben hierdurch die Klemmbacken in Längsrichtung des Drahtseils gegeneinander. Hierdurch wird das unter dem hohen, in Querrichtung wirkenden Klemmdruck stehende Drahtseil zugleich einer hohen, in Längsrichtung des Seiles wirkenden Schubbeanspruchung unterworfen, die einen hohen Verschleiß des Seiles zur Folge haben und zu Korbbildungen im Seil führen kann. Zugleich wird ein Teil der Hebelkraft durch die exzentrische, kombinierte Dreh- und Schwenkbewegung in eine Längskraft umgesetzt, die der Richtung der am Seil angreifenden Zugkraft entgegengesetzt ist, so daß das unter Zug stehende Seil das Bestreben hat, die beim Klemmvorgang entgegen der Zugrichtung sich auf dem Seil bewegende Klemmbacke zurückzuziehen und die Klemmschlüssel in eine solche Lage zurückzudrehen, in der sich die Klemmbacken voneinander entfernen können. Die Klemmschlüssel wirken also beim Ziehen eines unter Last stehenden Seiles nicht selbst-klemmend und verschwenden einen Teil der auf sie zum Ziehen des Seiles übertragenen Kraft zu einer nutzlosen und das Seil schädigenden gegenseitigen Verschiebung der Klemmbacken auf dem Seil. Außerdem unterliegen die aufeinanderreibenden Zylinderflächen der Klemmschlüssel und Klemmplatten einem hohen Verschleiß, da sie ja unter hohem gegenseitigem Flächendruck nicht nur eine reine Drehbewegung, sondern auch eine Translationsbewegung gegeneinander ausführen. Ferner ist die Herstellung der Klemmstücke und der ihnen angepaßten Ausnehmungen in den Klemmbacken schwierig und teuer.

Es ist ferner eine Klemmvorrichtung für Zug- und Hubgeräte bekannt (DE-A-2 045 501), bei der jeweils zwei auf einander gegenüberliegenden Seiten des Zugmittels angeordnete Klemmbacken durch Bolzen mit mindestens zwei Klemmhebeln zu einem Gelenkparallelogramm verbunden und quer zur Längsrichtung des Zugmittels gegeneinander bewegbar sind. Auch hier führen die beiden Klemmbacken beim Einklemmen des Zugmittels eine Relativbewegung zueinander aus, so daß schädliche Längsschubspannungen beim Festklemmen in das Seil eingetragen werden, welche das Seil hoch beanspruchen und dessen frühen Verschleiß zur Folge haben.

Es gibt auch schon eine ähnliche Klemmvorrichtung für Zug- und Hubgeräte (US-PS 1 920 686), bei der die beiden Klemmbacken einerseits durch zwei Klemmhebel, die ein Gelenkparallelogramm bilden, hin- und hergeschwenkt und andererseits durch einen Lenker, der mit den Klemmhebeln einen flachen Winkel bildet, gegeneinander bewegt werden.

Die übertragbare Kraft ist jedoch verhältnismäßig gering, da der eine Zapfen, mit dem der Lenker und die eine Klemmbacke gelenkig verbunden sind und der durch ein in der anderen Klemmbacke angeordnetes Langloch geht, nur eine geringfügig andere Winkellage hat als die Klemmhebel. Außerdem ist die Reibung und der Verschleiß zwischen dem Zapfen und den Wänden des Langloches erheblich, in welchem sich der Zapfen bewegt, so daß bei dieser Ausführung mit erheblichen Betriebsstörungen zu rechnen ist.

Aufgabe der Erfindung ist es, diese Nachteile zu vermeiden und eine Klemmvorrichtung zum Einklemmen, Ziehen oder Nachlassen eines durchlaufenden Seiles zu schaffen, die aus einfachen, leicht und mit geringen Kosten herstellbaren Teilen besteht, auf das einzuklemmende Zugmittel keine Schubspannungen in dessen Längsrichtung ausübt und den vollen Klemmdruck nur quer zur Zugmittellängsrichtung auf das Zugmittel einwirken läßt.

Diese Aufgabe wird mit den in den Ansprüchen 1 und 12 angegebenen Mitteln in der Weise gelöst, daß der Klemmschlüssel auf der einen Klemmbacke in Längsrichtung des Zugmittels verschieblich abgestützt ist, und daß die erste Klemmbacke und die zweite Klemmbacke durch Führungsmittel miteinander verbunden sind, welche eine Verschiebung der beiden Klemmbacken relativ zueinander in Längsrichtung des Zugmittels verhindern.

Hierdurch wird erreicht, daß die Zugkraft symmetrisch auf zwei einander gegenüberliegenden Seiten in das Zugmittel eingeleitet wird und in Längsrichtung wirkende Schubkräfte im Zugmittel nicht auftreten. Das Zugmittel, beispielsweise ein Seil oder eine Stange, wird hierdurch weniger hoch beansprucht und hat ebenso wie die Klemmbacken eine längere Lebensdauer. Da die Klemmschlüssel auf der einen Klemmbacke in Längsrichtung des Zugmittels verschieblich sind, können sie auf die Klemmbacke nur Normalkräfte übertragen und führen in ihrer Lagerung in der einen Klemmbacke eine reine Drehbewegung aus. Hierdurch kann bei gleichem Schwenkwinkel ein doppelt so großer Hub erzielt werden wie bei der bekannten Klemmvorrichtung mit exzentrisch ausgebildeten Klemmschlüsseln.

Um die Klemmbacken so miteinander zu verbinden, daß sie sich zwar aufeinander zu bewegen und mit ihren gegeneinandergerichteten Klemmflächen das Seil zwischen sich einklemmen, aber sich nicht in Längsrichtung gegeneinander verschieben können, können die Klemmbacken durch mindestens eine Lasche miteinander verbunden sein, die ein quer zur Zugmittellängsrichtung laufendes Langloch aufweist, in welches ein an mindestens einer Klemmbacke angeordneter Koppelzapfen eingreift. Wenn die Klemmbacken so ausgebildet sind, daß die erste Klemmbacke zwischen zwei Seitenwangen der zweiten Klemmbacke angeordnet ist, können die Klemmbacken auch durch mindestens ein Koppelelement verbunden sein, das in einer Klemmbacke fest und in einer quer zur Zugmittellängsrichtung verlaufenden Ausnehmung der anderen Klemmbacke verschieblich ist. Das Koppelelement kann dann ein Koppelbolzen sein, der mit seinen beiden Enden in Bohrungen der einen Klemmbacke sitzt und in ein Langloch der anderen Klemmbacke eingreift, das sich quer zur Zugmittellängsrichtung erstreckt. Besonders zweckmäßig ist es, wenn in den Seitenflächen der ersten Klemmbacke quer zur Zugmittellängsrichtung verlaufende Nuten angeordnet sind, in welche Koppelzapfen eingreifen, die in den Seitenwangen der zweiten Klemmbacke sitzen. Diese Koppelzapfen werden dann beim Zusammenbau der Klemmbacken von den seitlich angeordneten Klemmhebeln verriegelt und können nicht herausfallen.

Der Klemmschlüssel kann ein teilzylindrischer Klemmbolzen sein, der auf mindestens einem Teil seiner Länge eine Abflachung aufweist und in der einen Klemmbacke drehbar gelagert und mit seiner Abflachung auf einer etwa parallel zur Klemmfläche verlaufenden Stützfläche der anderen Klemmbacke in Zugmittellängsrichtung verschieblich abgestützt ist. Diese Ausgestaltung ist bei einer Ausführungsform besonders zweckmäßig, bei der die beiden Klemmbacken durch paarweise angeordnete Klemmhebel zu einem Gelenkparallelogramm verbunden sind, wobei dann mindestens zwei der Gelenkbolzen als Klemmbolzen dienen.

Bei einer anderen Ausführungsform ist der Klemmschlüssel auf der einen Klemmbacke mit einem Druckstück abgestützt, das eine Zylinderfläche und eine in Richtung der Zylinder-erzeugenden verlaufende ebene Fläche aufweist. Das Druckstück kann in einer mindestens teilzylindrischen Ausnehmung des Klemmschlüssels drehbar gelagert und mit seiner ebenen Fläche auf einer annähernd parallel zu den Klemmflächen verlaufenden Stützfläche der einen Klemmbacke gleitbeweglich abgestützt sein. Es ist aber auch möglich, das Druckstück mit seiner Zylinderfläche in einer mindestens teilzylindrischen Ausnehmung der einen Klemmbacke drehbar zu lagern und den Klemmschlüssel mit einer Abflachung auf der ebenen Fläche des Druckstückes gleitbeweglich abzustützen. In beiden Fällen vollzieht sich die Gleitbewegung in Längsrichtung nicht auf der Seiloberfläche, sondern entweder zwischen dem Druckstück und einer auf einer Klemmbacke angeordneten ebenen Stützfläche oder zwischen der Abflachung des Klemmschlüssels und der ebenen Fläche des Druckstückes, so daß nur Normalkräfte auf die Klemmbacken übertragen werden. Hierdurch ist es weiterhin möglich, in den Seitenwangen der zweiten Klemmbacke kreisförmige Öffnungen vorzusehen, in denen der Klemmschlüssel drehbar sitzt. Diese kreisförmigen Öffnungen können leicht und sehr genau hergestellt werden, so daß die Klemmschlüssel in bezug auf die Klemmbacken eine genau definierte Lage haben.

Die Erfindung gestattet es ferner, den Klemmschlüssel so auszubilden, daß er mindestens auf Teilen seiner Länge den Querschnitt eines Teilzylinders hat, dessen Krümmungsradius dem Radius der kreisförmigen Öffnungen in der zweiten Klemmbacke entspricht. Der Klemmschlüssel kann deshalb in einfacher Weise aus Abschnitten einer Halbrundstange oder einer abgeflachten Rundstange bestehen, die aus Stahl gezogen oder gedreht ist.

Bei Verwendung eines Druckstückes kann dieses in der ersten Klemmbacke gegenüber dem Mittelpunkt der kreisförmigen Öffnungen in der zweiten Klemmbacke derart in Druckmittellängsrichtung versetzt gelagert sein, daß es sich teilweise außerhalb der Öffnungsränder zwischen den Seitenwangen der zweiten Klemmbacke befindet. Dies hat den Vorteil, daß das Druckstück in zusammengebautem Zustand der Klemmvorrichtung zwischen den Seitenwangen der zweiten Klemmbacke gehalten und geführt wird und sich nicht seitlich verschieben kann, wenn es sich unter dem Druck des Klemmschlüssels in seiner Ausnehmung dreht.

Besonders zweckmäßig ist es, wenn der mit dem Ende des Klemmschlüssels undrehbar verbundene Klemmhebel an seiner Innenseite einen Führungszapfen aufweist, der in die kreisförmige Öffnung der Seitenwange der zweiten Klemmbacke eingreift und bei einer Schwenkung des Klemmhebels am Öffnungsrand entlanggleitet. Dies hat den Vorteil, daß die Klemmschlüssel auf ihrer ganzen Länge teilzylindrisch sein können und sich in den kreisförmigen Öffnungen der zweiten Klemmbacke in Radialrichtung nicht verschieben, da sie über die seitlich angeordneten Klemmhebel und deren Führungszapfen mit ihrer zylindrischen Fläche immer am kreisförmigen Öffnungsrand gehalten werden.

Wenn bei der Klemmvorrichtung nach der Erfindung die beiden Klemmbacken mit den Klemmhebeln zu einem Gelenkparallelogramm verbunden sind, ist es besonders zweckmäßig, wenn die beiden Klemmbacken durch eine in der Mitte angeordnete oder zwei auf beiden Seiten der Klemmvorrichtung angeordnete Laschen miteinander verbunden sind, die auf zwei eine Klemmbacke mit den Klemmhebeln verbindenden Bolzen sitzen und Langlöcher aufweisen, in die an einem oder an beiden Klemmbacken angeordnete Koppelzapfen angreifen. An dieser Lasche kann dann zweckmäßig auch der Anlenkpunkt für Rücklaufhebel oder Hebel zum Öffnen der Klemmvorrichtung angeordnet sein.

Zum Erzeugen des Formschlusses der zusammenwirkenden Teile trägt eine Klemmbacke zweckmäßig einen Federbügel, an dem sich die andere Klemmbacke mittelbar oder unmittelbar abstützt. Wenn die zweite Klemmbacke im Querschnitt U-förmig ist, kann die zwischen den Seitenwangen der U-förmigen Klemmbacke angeordnete erste Klemmbacke mit dem sie in Längsrichtung überspannenden Federbügel an einem Distanzstück hängen, welches die freien Ränder der Seitenwangen der U-förmigen zweiten Klemmbacke im Abstand voneinander verbindet.

In der nachfolgenden Beschreibung und anhand der Zeichnungen werden bevorzugte Ausführungsformen der Erfindung an Beispielen näher erläutert. Es zeigt

Fig. 1 ein Handhebezeug zum Ziehen und Nachlassen eines durchlaufenden Zugseiles mit Klemmvorrichtungen nach der Erfindung in Klemmstellung im Längsschnitt,

Fig. 2 eine der in das Handhebezeug nach Fig. 1 eingebauten Klemmvorrichtungen in der Offenstellung in vergrößertem Maßstab bei abgenommenen vorderen Zugstangen,

Fig. 3 den Gegenstand der Fig. 2 in einem Querschnitt nach Linie III-III,

Fig. 4 den Gegenstand der Fig. 2 in einem Querschnitt nach Linie IV-IV,

Fig. 5 einen der Fig. 3 entsprechenden Querschnitt einer abgewandelten Ausführungsform der Klemmvorrichtung nach Fig. 2, bei der die zweite Klemmbacke aus Seitenwangen und einer dazwischen angeordneten Klemmleiste zusammengesetzt ist,

Fig. 6 eine andere Ausführungsform der Klemmvorrichtung nach der Erfindung in einer der Fig. 3 entsprechenden Darstellung,

Fig. 7 den Gegenstand der Fig. 6 in einem Querschnitt nach Linie VII-VII,

Fig. 8 eine Einzelheit der Fig. 6, welche den Klemmschlüssel und das diesem zugeordnete Druckstück in einer Seitenansicht zeigt,

Fig. 9 eine weitere Ausführungsform der Klemmvorrichtung nach der Erfindung in einer der Fig. 3 entsprechenden Darstellung und

Fig. 10 den Gegenstand der Fig. 9 in einem Querschnitt nach Linie X-X der Fig. 9.

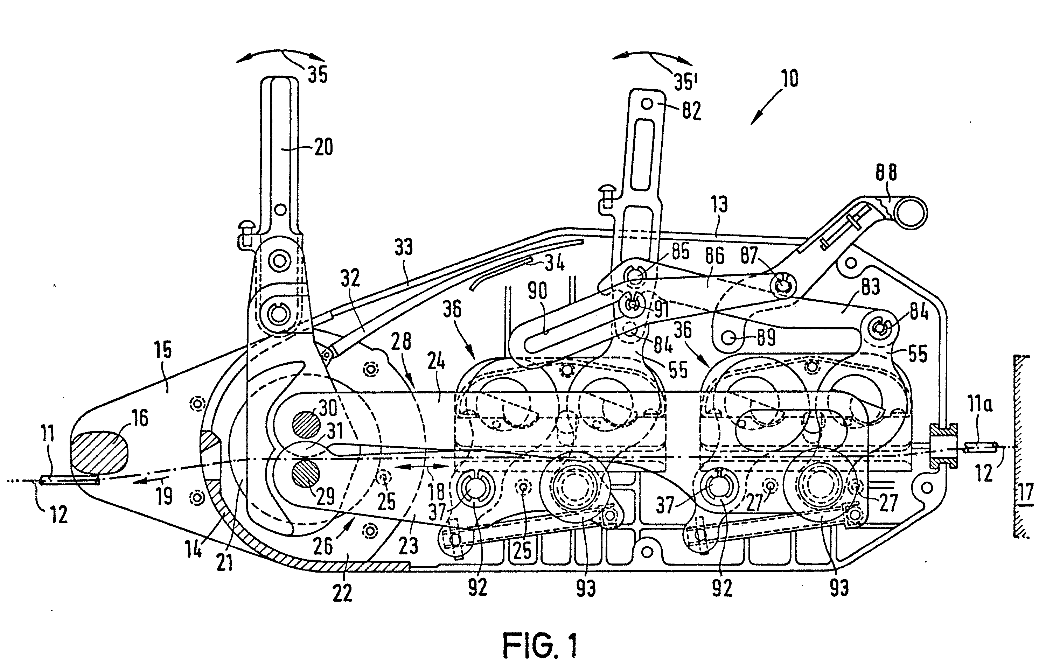

In den Zeichnungen ist mit 10 ein Handhebezeug zum Ziehen und Nachlassen eines durchlaufenden Zugmittels, nämlich eines Drahtseils 11, bezeichnet, das in den Zeichnungen fortgelassen und nur durch seine Längsachse 12 angedeutet ist. Das Handhebezeug 10 hat ein langgestrecktes, flaches, im wesentlichen rechteckiges Gehäuse 13, das an seinem linken Ende 14 einen Fortsatz 15 mit einer Öse 16 od. dgl. aufweist, mit dem das Gehäuse an einem Festpunkt angehängt werden kann. An dem in Fig. 1 rechten Ende 11a des Zugmittels 11 ist eine hier nur schematisch angedeutete Last 17 befestigt, die mit dem Zugmittel oder Seil 11 in dessen Längsrichtung 18 nach links bewegt werden soll, wobei das Seil 11 in Richtung des Pfeiles 19 durch das Handhebezeug 10 hindurchgezogen wird.

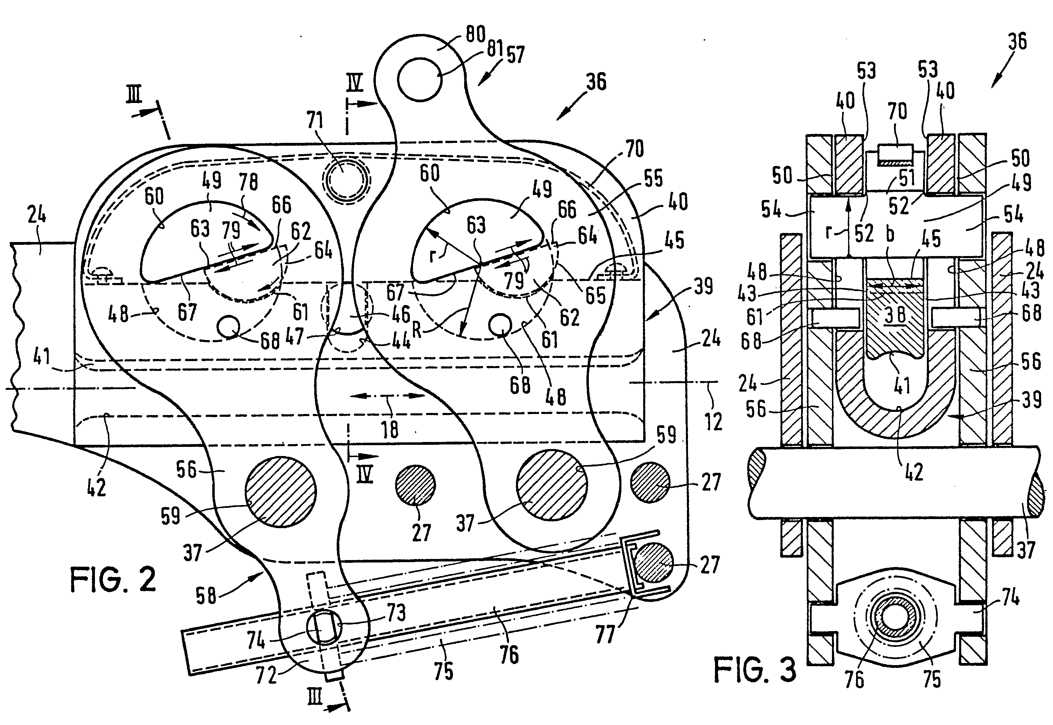

Im Gehäuse 13 ist an dessen linkem Ende 14 ein Kurbelachsblock 22 angeordnet, in dem ein Vorschubhebel 20 mit einer Kurbelachse 21 schwenkbar gelagert ist. Exzentrisch zur Kurbelachse 21 sind an dieser zwei Paare von Schub- und Zugstangen 23 und 24 angelenkt, von denen das in Fig. 1 untere Stangenpaar 23 durch Nietbolzen 25 zu einem Abschloßkörper 26 und das obere Stangenpaar 24 durch Nietbolzen 27 zu einem Aufschloßkörper 28 verbunden sind. Von den Schub- und Zugstangen 23 und 24 sind in Fig. 1 nur die vorne liegenden Stangen erkennbar, die jedoch in den Fig. 2, 6 und 9 fortgelassen sind.

Die Schub- und Zugstangen 23 und 24 sind mit Kurbelachsbolzen 29 und 30 an der Kurbelachse angelenkt, die sich im gleichen Abstand auf einander gegenüberliegenden Seiten des Mittelpunktes 31 der Kurbelachse 21 befinden, die in hier nicht näher dargestellter Weise mit Kugellagern im Kurbelachsblock 22 drehbar gelagert ist. Oberhalb der Schub- und Zugstangen 24 ist an der Kurbelachse 21 eine Gummilasche 32 befestigt, welche einen Schlitz 33 im Gehäuse 13 abdeckt und sich zwischen dessen oberem Rand und einem Führungsblech 34 in Längsrichtung des Gehäuses hin- und herschiebt, wenn der Vorschubhebel 20 in Richtung des Pfeiles 35 hin- und hergeschwenkt wird.

In Fig. 1 rechts neben dem Kurbelachsblock 22 sind zwei Klemmvorrichtungen angeordnet, die nach der Erfindung ausgebildet und in ihrer Gesamtheit mit 36 bezeichnet sind. Die linke Klemmvorrichtung ist mit den Schub- bzw. Zugstangen 23 des unteren Abschloßkörpers 26 verbunden und wird von diesem bewegt, während die rechte Klemmvorrichtung mit den Schub- bzw. Zugstangen 24 des oberen Aufschloßkörpers 28 verbunden ist und von diesem bewegt wird. Die Klemmvorrichtungen 36 gleiten auf dem zwischen ihnen durchgeführten Zugmittel 11 hin und her, wobei abwechselnd die eine Klemmvorrichtung 36 das Zugmittel 11 zwischen sich einklemmt und in Richtung des Pfeiles 19 durch das Gerät zieht, während die andere Klemmvorrichtung entgegen der Richtung des Pfeiles 19 auf dem Seil 11 in seiner Offenstellung entlanggleitet, um es dann zwischen sich einzuklemmen und ebenfalls in Richtung des Pfeiles 19 zu ziehen, während die soeben tätig gewesene Klemmvorrichtung 36 sich öffnet und wieder auf dem Seil 11 entgegen dessen Zugrichtung 19 in Längsrichtung 18 entlanggleitet.

Die beiden im Gerät verwendeten Klemmvorrichtungen sind identisch, so daß im folgenden jeweils nur die in Fig. 1 dargestellte rechte Klemmvorrichtung näher beschrieben werden soll.

Wendet man sich den Fig. 2 und 3 zu, so erkennt man, daß die Klemmvorrichtung 36 zwischen den beiden Zugstangen 24 des Aufschloßkörpers angeordnet und mit diesen durch zwei Klemmhebelachsen 37 gelenkig verbunden ist. Die Klemmvorrichtung 36 besteht im wesentlichen aus einer ersten Klemmbacke 38 und einer zweiten Klemmbacke 39. Die zweite Klemmbacke 39 hat einen U-förmigen Querschnitt und umschließt die erste Klemmbacke 38, welche im wesentlichen die Gestalt einer rechteckigen Leiste hat und zwischen den Seitenwangen 40 der zweiten Klemmbacke 39 angeordnet ist.

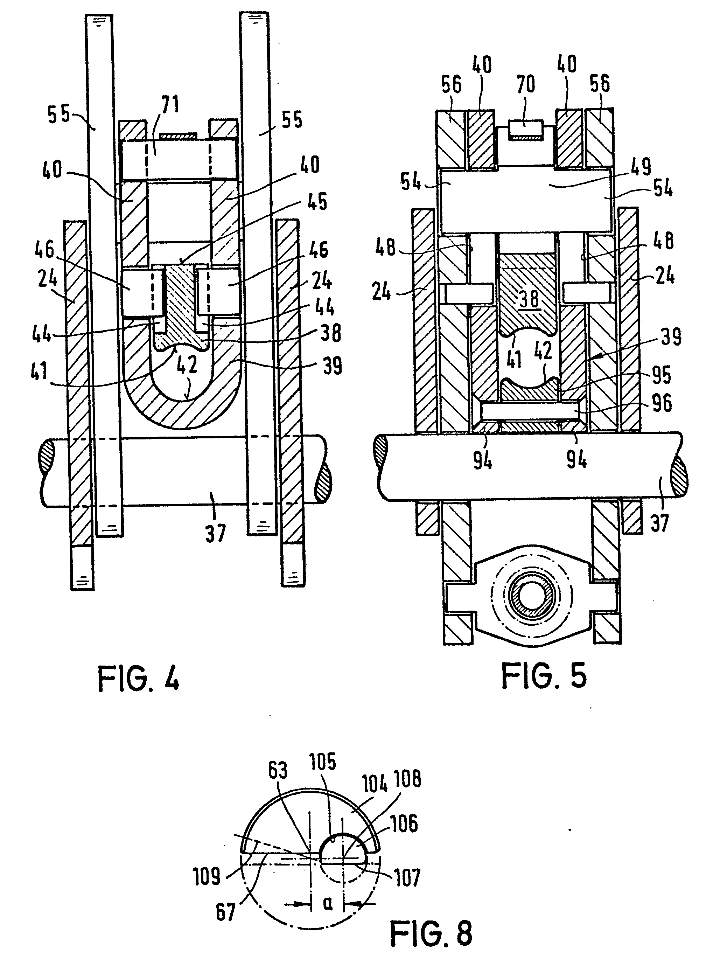

Die erste Klemmbacke 38 ist gegenüber der zweiten Klemmbacke 39 quer zur Längsrichtung 18 des Zugmittels 11 verschiebbar, wird jedoch in Längsrichtung des Zugmittels 11 unverschieblich gehalten. Zu diesem Zweck sind in die Seitenflächen 43 der ersten Klemmbacke 38 quer zur Zugmittellängsrichtung 18 verlaufende Nuten 44 eingefräst, die nach der oberen Stützfläche 45 hin offen sind, welche der unteren Klemmfläche 41 gegenüberliegt und etwa parallel zu dieser verläuft (Fig. 4). In diese Nuten 44 greifen Koppelzapfen 46 ein, die in Bohrungen 47 sitzen, welche sich in den Seitenwangen 40 der zweiten Klemmbacke 39 befinden. Wenn sich die Klemmbacken 38 und 39 quer zur Zugmittellängsrichtung 18 gegeneinander bewegen, gleiten die Koppelzapfen 46 in den Nuten 44 entlang und führen die Klemmbacken 38 und 39 so, daß sie sich nicht in Längsrichtung 18 gegeneinanderbewegen können.

In den Seitenwangen 40 der zweiten Klemmbacke 39 sind zwei in Zugmittellängsrichtung 18 im Abstand voneinander angeordnete, kreisförmige Öffnungen 48 vorgesehen, die in den einander gegenüberliegenden Seitenwangen 40 paarweise miteinander fluchten. Durch je zwei miteinander fluchtende Öffnungen 48 ist je ein Klemmschlüssel 49 hindurchgesteckt, der über die Außenflächen 50 der Seitenwangen 40 vorsteht. Die Klemmschlüssel 49 haben den Querschnitt eines Teilzylinders, der in seinem mittleren Teil einen vorspringenden Absatz 51 aufweist, welcher zwei Schultern 52 bildet, die an der Innenfläche 53 einer jeden Seitenwange 40 anliegen. Auf jedes vorspringende Ende 54 der Klemmschlüssel 49 ist ein Klemmhebel 55 bzw. 56 aufgesteckt. Die Klemmhebel 55 und 56 der beiden Klemmhebelpaare 57 und 58 weichen in ihrer Gestalt etwas voneinander ab. Alle Klemmhebel 55 und 56 haben aber eine Bohrung 59, mit der sie auf den Klemmhebelachsen 37 des Aufschloßkörpers 28 schwenkbar gelagert sind, und sie haben im Abstand von diesen Bohrungen 59 kreissegmentförmige Öffnungen 60, in welche die überstehenden Enden 54 der Klemmschlüssel 49 passend eingreifen.

Während die Klemmschlüssel 49 in den Klemmhebeln 55 und 56 festsitzen, können sie sich in den kreisförmigen Öffnungen 48 der zweiten Klemmbacke 39 frei drehen. Zu diesem Zweck ist der Krümmungsradius r des teilzylindrischen Klemmschlüssels 49 im Bereich der zweiten Klemmbacke 39 ebenso groß wie der Radius R der kreisförmigen Öffnung 48.

Man erkennt aus Fig. 2, daß in der oberen Fläche 45 der ersten Klemmbacke 38 zwei teilzylindrische Ausnehmungen 61 angeordnet sind, die sich quer zur Längsrichtung der Klemmbacken 38 und 39 erstrecken. In diesen teilzylindrischen Ausnehmungen 61 ist je ein Druckstück 62 drehbar gelagert, das bei dem in den Fig. 2 bis 5 dargestellten Ausführungsbeispielen im Querschnitt teilzylindrisch ist und dessen Länge in Richtung der Zylindererzeugenden ebenso groß ist wie die Breite b der ersten Klemmbacke 38. Die teilzylindrischen Ausnehmungen 61 in der ersten Klemmbacke 38 sind gegenüber den Mittelpunkten 63 der kreisförmigen Öffnungen 48 in der zweiten Klemmbacke 39 derart versetzt, daß sich die in ihnen gelagerten Druckstücke 62 teilweise außerhalb des Randes der Öffnungen 48 befinden, d. h. mit einem Segmentabschnitt 64 zwischen den Innenflächen 53 der Seitenwangen 40 der zweiten Klemmbacke 39 liegen, wie dies in Fig. 2 dargestellt ist. Die Druckstücke 62 werden hierdurch zwischen den Seitenwangen 40 der zweiten Klemmbacke 39 stets seitlich gehalten.

Auf der der Zylinderfläche 65 gegenüberliegenden ebenen Fläche 66 des Druckstückes 62 liegt die Abflachung 67 des teilzylindrischen Klemmschlüssels 49 auf, der mit dem jeweiligen Klemmhebelpaar 55 bzw. 56 fest verbunden ist, sich aber in den kreisförmigen Öffnungen 48 der zweiten Klemmbacke 39 frei drehen kann. Damit er immer an den Rändern der kreisförmigen Öffnungen 48 anliegt, sind die Klemmhebel 55 bzw. 56 an ihren Innenseiten mit Führungszapfen 68 versehen, die den Klemmschlüsseln 49 diametral gegenüberliegen und bei einer Schwenkung der Klemmhebel 55 bzw. 56 an den Rändern der Öffnungen 48 entlanggleiten.

Um einen Formschluß der einzelnen Teile in der in den Fig. 2 und 3 dargestellten Offenstellung der Klemmbacken herbeizuführen, ist auf der oberen Gleitfläche 45 der ersten Klemmbacke 38 an deren beiden Enden ein Federbügel 70 befestigt, mit dem sie an einem Distanzstück 71 hängt, welches die Seitenwangen 40 der U-förmigen zweiten Klemmbacke 39 an ihrem oberen Rand miteinander verbindet.

Wie aus Fig. 2 hervorgeht, haben die Klemmhebel 56 des linken Klemmhebelpaares 58 an ihrem unteren Ende einen Fortsatz 72, der eine Bohrung 73 aufweist, in welche ein Federwiderlager 74 eingreift, gegen das sich eine Druckfeder 75 abstützt, die eine Führungsstange 76 umgibt und sich mit ihrem anderen Ende auf einer Traverse 77 abstützt. Die Traverse 77 liegt an einem Nietbolzen 27 des Aufschloßkörpers 28 an.

Man erkennt, daß die Druckfeder 75 das Bestreben hat, das Klemmhebelpaar 58 um den Mittelpunkt 63 der kreisförmigen Öffnungen 48 im Uhrzeigersinn in Richtung des Pfeiles 78 zu schwenken, wobei sich die Klemmhebel um die Klemmhebelachse 37 drehen und die Klemmschlüssel 49 mit ihrer Abflachung 67 auf die ebene Fläche 66 der Druckstücke 62 drücken, die ihrerseits auf die obere Klemmbacke 38 einen Klemmdruck auf das Zugmittel 11 quer zu dessen Längsrichtung ausüben. Bei dieser Schwenkbewegung drehen sich die Druckstücke 62 mit ihren Zylinderflächen 65 in den teilzylindrischen Ausnehmungen 61 der ersten Klemmbacke 38, während die Abflachungen 67 der Klemmschlüssel 49 auf den ebenen Flächen 66 der Druckstücke 62 entlanggleiten, wie dies durch die Pfeile 79 angedeutet ist.

Auch die Klemmhebel 57 haben einen über die Klemmbacken vorstehenden Fortsatz 80, der jedoch nach oben gerichtet ist und eine Öse 81 zum Anschluß an einen Rückzughebel 82 bzw. an eine Rückzugstange 83 (Fig. 1) aufweist.

Wendet man sich nun wieder Fig. 1 zu, so erkennt man, daß der Rückzughebel 82, der über die Oberseite des Gehäuses 13 herausschaut, mit einem Rückzugbolzen 84 an den Klemmhebel 55 derjenigen Klemmvorrichtung 36 angelenkt ist, die dem Kurbelachsblock 22 am nächsten liegt. Über die Rückzugstange 83 ist der Rückzughebel an den Klemmhebel 55 der zweiten Klemmvorrichtung 36 angeschlossen. Die Rückzugstange 83 besteht aus zwei Hälften, von denen nur die eine dargestellt ist und die an ihrem einen Ende die Klemmhebel 55 und an ihrem anderen Ende den Rückzughebel 82 zwischen sich einschließen. Die zweiteilige Rückzugstange 83 ist mit einem Rückzugbolzen 84 an den Klemmhebeln 55 der rechten Klemmvorrichtung 36 angeschlossen und mit dem Rückzughebel 82 durch den Rückzughebelbolzen 85 gelenkig verbunden.

Auf beiden Seiten von Rückzughebel 82 und Rückzugstange 83 befinden sich zwei Schaltbleche 86, welche die gleiche Form haben und von denen in Fig. 1 nur eine zu erkennen ist. Die Schaltbleche 86 sind mit einer Schalthebelwelle 87 an einem Schalthebel 88 angelenkt, der mit einer Schalthebelachse 89 im Gehäuse 13 schwenkbar gelagert ist. An ihren anderen Enden haben die Schaltbleche Langlöcher 90, mit denen sie auf der Rückzughebelachse 91 entlanggleiten können. Von dieser Rückzughebelachse 91 haben der Rückzugbolzen 84 und der Rückzughebelbolzen 85, die auf diametral gegenüberliegenden Seiten der Rückzughebelachse 91 angeordnet sind, gleichen Abstand.

Die Klemmhebelbolzen 37 der in Fig. 1 links angeordneten Klemmvorrichtung 36 greifen in entsprechende Bohrungen der Schub- bzw. Druckstangen 23 des Abschlosses 26 ein und sind durch Segerringe 92 gegen Herausfallen gesichert. In gleicher Weise sind die Klemmhebelbolzen 37 der in Fig. 1 rechts angeordneten Klemmvorrichtung 36 mit den Schub- bzw. Zugstangen 24 des Aufschlosses 28 verbunden und gesichert. Außerdem tragen die jeweils rechts angeordneten Klemmhebelbolzen 37 an ihren Außenseiten Rollen 93, die in im Gehäuse 13 ausgeformten und hier nicht näher dargestellten Schienen entlangrollen und hierdurch die Klemmvorrichtungen 36 im Gehäuse bei ihrer Bewegung in Längsrichtung 18 des Zugmittels 11 führen.

Die Wirkungsweise des Handhebezeuges 10 und seiner Klemmvorrichtungen 36 ist folgende:

Wenn das Seil 11 mit der an ihm hängenden Last 17 in Richtung des Pfeiles 19 durch das Gerät gezogen werden soll, das mit seiner Öse 16 an einem Festpunkt befestigt ist, wird der Vorschubhebel 20 in Pfeilrichtung 35 hin- und hergeschwenkt. Bei einer Schwenkbewegung im Uhrzeigersinn verschieben sich die Schub- und Zugstangen 23 des Abschloßkörpers 26, die unterhalb des Mittelpunktes 31 der Kurbelachse 21 angeordnet sind, nach links, wobei sie die mit ihnen durch die Klemmhebelbolzen 37 verbundenen Klemmhebel 55 und 56 der linken Klemmvorrichtung 36 mitnehmen. Da die Klemmhebel 55 und 56 mit ihren Klemmschlüsseln 49 in den kreisförmigen Öffnungen 48 der zweiten Klemmbacke 39 drehbar gelagert sind, führen sie hierbei gleichzeitig eine Schwenkbewegung um die Mittelpunkte 63 der kreisförmigen Öffnungen 48 aus, während die an den Klemmhebeln 55 und 56 angeordneten Führungszapfen 68 am Rand der kreisförmigen Öffnungen 48 entlanggleiten. Bei dieser Schwenkbewegung drücken die Klemmschlüssel 49 mit ihrer Abflachung 67 auf die ebene Fläche 66 der Druckstücke 62, die sich hierbei in ihren teilzylindrischen Ausnehmungen 61 in der oberen Klemmbacke 38 drehen und diese quer zur Längsrichtung 18 gegen das Seil 11 drücken, so daß dieses zwischen den Klemmflächen 41 und 42 der Klemmbacken 38 und 39 dieser Klemmvorrichtung eingeklemmt wird. Gleichzeitig wird das eingeklemmte Seil 11 von der linken Klemmvorrichtung 36, die sich zusammen mit dem Abschloßkörper 26 nach links bewegt, in Richtung des Pfeiles 19 mitgenommen.

Bei der Schwenkbewegung des Vorschubhebels 20 im Uhrzeigersinn werden gleichzeitig die Schub- und Druckstangen 24 des Aufschloßkörpers in Fig. 1 nach rechts geschoben. Sie wirken hierbei durch die Klemmhebelbolzen 37 auf die Klemmhebel 55 und 56 der rechten Klemmvorrichtung 36 ein und verschwenken diese entgegen der Wirkung der Druckfeder 75 so weit entgegen dem Uhrzeigersinn um die Mittelpunkte 63 der kreisförmigen Öffnungen 48 in der zweiten Klemmbacke 39, bis sich die Klemmflächen 41 und 42 der Klemmbacken 38 und 39 vom Seil 11 lösen und dieses zwischen den Klemmbacken der rechten Klemmvorrichtung 36 durchrutschen lassen. Gleichzeitig wird die rechte Klemmvorrichtung 36 auf dem Seil 11 in Fig. 1 nach rechts geschoben, bis die äußerste Stellung erreicht ist.

Wenn der Vorschubhebel 20 in Pfeilrichtung 35 nach links geschwenkt wird, bewegen sich die Schub- und Zugstangen 24 des Aufschloßkörpers 28 nach links und die Schub- und Zugstangen 23 des Abschloßkörpers 26 nach rechts. Hierdurch werden die Klemmhebel 55 und 56 der rechten Klemmvorrichtung 36 im Uhrzeigersinn geschwenkt und drücken die Klemmbacken 38 und 39 gegeneinander, so daß nun das Seil von der rechten Klemmvorrichtung 36 eingeklemmt und in Richtung des Pfeiles 19 mitgenommen wird, da sich ja die Schub- und Zugstangen 24 nach links bewegen. Umgekehrt werden die Klemmhebel 55 und 56 der linken Klemmvorrichtung 36 entgegen dem Uhrzeigersinn verschwenkt, so daß sich die Klemmbacken 38 und 39 dieser Klemmvorrichtung vom Seil lösen und nun von den Schub- und Zugstangen 23 des Abschloßkörpers 26 entgegen der Richtung des Pfeiles 19 auf dem Seil 11 entlanggeschoben werden können.

Man erkennt hieraus, daß sich die Klemmvorrichtungen 36 bei der hin- und hergehenden Schwenkbewegung des Vorschubhebels 20 in Richtung des Pfeiles 35 abwechselnd aufeinander zu- und voneinander wegbewegen, wobei das Seil abwechselnd von der einen Klemmvorrichtung eingeklemmt und mitgenommen wird, während die andere Klemmvorrichtung vom Seil gelöst wird und entgegen dessen Zugrichtung 19 auf diesem entlanggleitet.

Wenn die am Seil 11 hängende Last 17 nachgelassen werden soll, muß das Seil 11 entgegen der Richtung des Pfeiles 19 durch das Gerät laufen und zwangsweise zurückgeführt werden. In diesem Falle wird der Rückzughebel 82 ebenfalls in Richtung des Pfeiles 35' hin- und hergeschwenkt, der beim Ziehen des Seiles nur lose mitlief.

Wenn der Rückzughebel 82 im Uhrzeigersinn geschwenkt wird, übt er über den Rückzugbolzen 84 auf den Klemmhebel 55 der linken Klemmvorrichtung 36 eine Schwenkbewegung entgegen dem Uhrzeigersinn aus, wodurch die Klemmbacken vom Seil gelöst werden und die Klemmvorrichtung auf dem Seil 11 in Richtung des Pfeiles 19 entlanggleitet. Gleichzeitig wird von dem Rückzughebel 82 über den Rückzughebelbolzen 85 und die Rückzugstange 83 und den Rückzugbolzen 84 auf die Klemmhebel 55 der rechten Klemmvorrichtung 36 eine Schwenkbewegung im Uhrzeigersinne übertragen, wodurch das Seil zwischen den Klemmbacken dieser rechten Klemmvorrichtung festgeklemmt und zugleich entgegen der Richtung des Pfeiles 19 nach rechts geschoben wird. Da die Klemmhebel 56 beider Klemmvorrichtungen 36 mit den Klemmhebeln 55 durch die Schubstangen 23 bzw. 24 kraftschlüssig verbunden sind, führen sie die jeweils gleichen Bewegungen aus wie die ihnen benachbarten Klemmhebel 55.

Wenn der Rückzughebel 82 entgegen dem Uhrzeigersinn verschwenkt wird, werden die Klemmhebel 55 und 56 der linken Klemmvorrichtung 36 im Uhrzeigersinn verschwenkt, so daß das Seil 11 zwischen den Klemmbacken 38 und 39 dieser Klemmvorrichtung eingeklemmt und zugleich entgegen der Pfeilrichtung 19 nach rechts geführt wird, während die Klemmhebel 55 und 56 der rechten Klemmvorrichtung 36 entgegen dem Uhrzeigersinn geschwenkt werden, die Klemmbacken dieser Klemmvorrichtung sich vom Seil lösen und die rechte Klemmvorrichtung 36 am Seil entlang in Pfeilrichtung 19 verschoben werden kann.

Wenn das Seil 11 aus dem Handhebezeug 10 herausgenommen oder in dieses eingelegt werden soll, ist es möglich, mit dem Schalthebel 88 die Klemmbacken 38 und 39 beider Klemmvorrichtungen 36 gleichzeitig vom Seil zu lösen. Zu diesem Zweck wird der Schalthebel 88 entgegen dem Uhrzeigersinn verschwenkt, der über die Schaltbleche 86 und die Rückzughebelachse 91 gleichzeitig auf den Rückzugbolzen 84 und den Rückzughebelbolzen 85 einwirkt und hierdurch alle Klemmhebel 55 und 56 von beiden Klemmvorrichtungen 36 entgegen dem Uhrzeigersinn verschwenkt, so daß alle Klemmbacken sich unter der Wirkung der Federbügel voneinander wegbewegen und das Seil 11 freigeben.

Wenn keiner der Hebel 20, 82 und 88 bewegt wird, werden die Klemmhebel 55 und 56 von den Druckfedern 75 im Uhrzeigersinn geschwenkt, so daß die Klemmschlüssel 49 über die Druckstücke 62 auf die Klemmbacken 38 drücken und das Drahtseil 11 zwischen den Klemmbacken 38 und 39 eingeklemmt wird. Da das Seil 11 unter der Wirkung einer entgegen dem Pfeil 19 gerichteten Zugkraft steht, die von der Last 17 erzeugt wird, hat das Seil das Bestreben, die an ihm angeklemmten Klemmvorrichtungen 36 entgegen der Richtung des Pfeiles 19 nach rechts zu ziehen. Da aber alle Schub- und Zugstangen 23 und 24 am Kurbelachsblock 22 unbeweglich gehalten werden und mit den Klemmhebelbolzen 37 die Klemmhebel festhalten, werden diese unter der Zugkraft des Seiles noch weiter im Uhrzeigersinn geschwenkt, so daß sich der Klemmdruck bei zunehmendem Seilzug selbsttätig vergrößert. In diesem Zustand wirkt die Vorrichtung als reine Klemm- und Haltevorrichtung.

Die in Fig. 5 dargestellte Ausführungsform der Klemmvorrichtung nach der Erfindung entspricht im wesentlichen der in den Fig. 2 und 3 dargestellten Ausführungsform, weshalb hier gleiche Teile mit gleichen Bezugszeichen versehen sind. Der Unterschied zu der vorher beschriebenen Ausführungsform besteht darin, daß die zweite Klemmbacke 39 aus mehreren Teilen zusammengesetzt ist. Bei dieser Ausführungsform bestehen die beiden Seitenwangen 40 nicht aus einem Stück, sondern sind an ihren unteren Rändern 94 mit einer Klemmleiste 95 durch mehrere Niete 96 verbunden. Die Klemmleiste 95 hat einen im wesentlichen rechteckigen Querschnitt und eine ausgerundete Klemmfläche 42, die der Klemmfläche 41 an der Unterseite der ersten Klemmbacke 38 gegenüberliegt.

In diesem Zusammenhang ist darauf hinzuweisen, daß auch mehr als zwei Klemmbacken vorgesehen werden können. Beispielsweise könnten sowohl oben als auch unten zwei sich in Längsrichtung erstreckende, nebeneinander angeordnete Klemmbacken vorgesehen sein, welche das Zugmittel auch seitlich umgreifen und von denen die oberen durch eine Zentrierleiste und die unteren ebenfalls durch eine Zentrierleiste gegeneinandergepreßt werden, die auf die beiden oberen bzw. unteren Klemmbacken wirkt. Ferner ist es möglich, anstelle der beiden Klemmhebelpaare nur ein Klemmhebelpaar vorzusehen, mit dem die dann etwas kürzeren Klemmbacken gegeneinanderbewegt werden. Bei einfachen Klemmgeräten zum Arretieren des Zugmittels oder zum Heben geringerer Lasten würde auch ein einziger Klemmhebel zum Betätigen der Klemmvorrichtung genügen, der entweder auf einer Seite angeordnet oder gabelförmig ausgebildet ist.

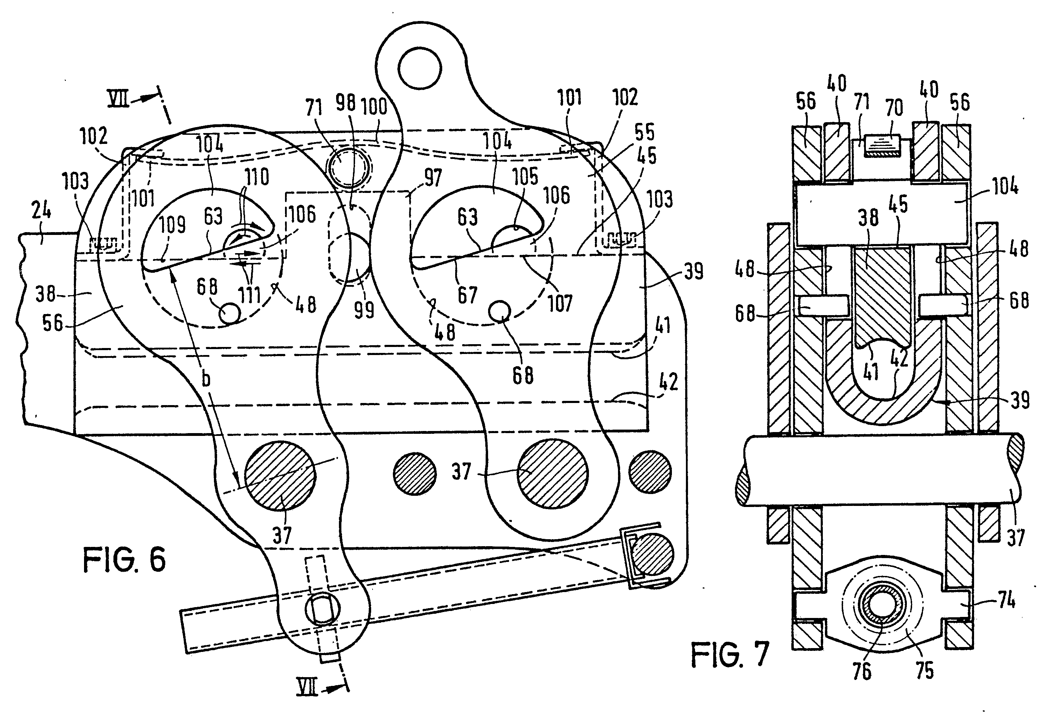

Die in den Fig. 6, 7 und 8 dargestellte Ausführungsform der Klemmvorrichtung nach der Erfindung stimmt weitgehend mit der Ausführungsform nach den Fig. 2, 3 und 4 überein. Übereinstimmende Teile sind deshalb mit gleichen Bezugszeichen versehen wie dort und werden hier nicht nochmals beschrieben.

Wie aus den Fig. 6 und 7 hervorgeht, hat die erste Klemmbacke 38 in ihrem mittleren Teil einen über ihre obere Stützfläche 45 vorspringenden Höcker 97, mit dem sie sich in ihrer oberen Endlage gegen das Distanzstück 71 abstützen kann und in dem ein die obere Klemmbacke 38 quer durchsetzendes Langloch 98 angeordnet ist, das sich quer zur Zugmittellängsrichtung 18 erstreckt. Das Langloch 98 wird von einem Koppelbolzen 99 durchsetzt, der mit seinen beiden Enden in nicht näher dargestellten Bohrungen sitzt, die in den Seitenwangen 40 der zweiten Klemmbacke 39 angeordnet sind. Hierdurch ist die erste Klemmbacke 38 gegenüber der zweiten Klemmbacke 39 quer zur Zugmittellängsrichtung 18 verschieblich, die Klemmbacken 38 und 39 können sich jedoch nicht in Zugmittellängsrichtung gegeneinander verschieben.

Zum Erzeugen des Formschlusses dient eine Blattfeder 100, deren Enden 101 unter Z-förmig gebogene Halter 102 greifen, die an den Enden der ersten Klemmbacke 38 auf dessen oberer Stützfläche 45 mit Schrauben 103 befestigt sind.

Die Klemmschlüssel 104 haben den Querschnitt eines Teilzylinders, der in die kreisförmigen Öffnungen 48 der zweiten Klemmbacke 39 paßt. Jeder Klemmschlüssel 104 hat in seiner der Klemmbacke 38 zugewandten Abflachung 67 gegenüber der Mittelachse 63 seitlich versetzt eine teilzylindrische Ausnehmung 105, in der ein Druckstück 106 drehbar gelagert ist, das im Querschnitt ebenfalls teilzylindrisch ist und mit seiner ebenen Fläche 107 auf der zu den Klemmflächen 41 und 42 etwa parallel verlaufenden oberen Stützfläche 45 der ersten Klemmbacke 38 in deren Längsrichtung gleitbeweglich abgestützt ist. Der Abstand a des Mittelpunktes 108 der teilzylindrischen Ausnehmung 105 von der Mittelachse 63 der Öffnung 48, die mit der Rotationsachse des teilzylindrischen Klemmschlüssels 104 zusammenfällt, bestimmt zusammen mit dem Abstand b der Mittelachse 63 von der Achse der Klemmhebelbolzen 37 das Klemmverhältnis.

In ihrem mittleren Teil sind die Klemmschlüssel 104 in ihrer Abflachung 67 mit einer etwa radial sich erstreckenden, zur Abflachung 67 hin offenen Ausnehmung 109 versehen, welche die gleiche Breite hat wie die obere Klemmbacke 38. Hierdurch ist es möglich, die Klemmschlüssel etwas weiter entgegen dem Uhrzeigersinn zu schwenken und die Klemmflächen 41 und 42 der Klemmbacken 38 und 39 etwas weiter voneinander zu entfernen.

Man erkennt, daß die Klemmschlüssel 104 bei einer Verschwenkung der Klemmhebel 55 und 56 im Uhrzeigersinn über die teilzylindrischen Druckstücke 106 auf die obere Stützfläche 45 der ersten Klemmbacke 38 drücken und diese hierdurch gegen die zweite Klemmbacke 39 pressen. Hierbei drehen sich die Druckstücke 106 in den teilzylindrischen Ausnehmungen 105 der Klemmschlüssel 104 und gleiten gleichzeitig in Zugmittellängsrichtung 18 auf der oberen Stützfläche 45 der ersten Klemmbacke 38 entlang, wie dies in Fig. 6 durch die kleinen Pfeile 110 und 111 angedeutet ist.

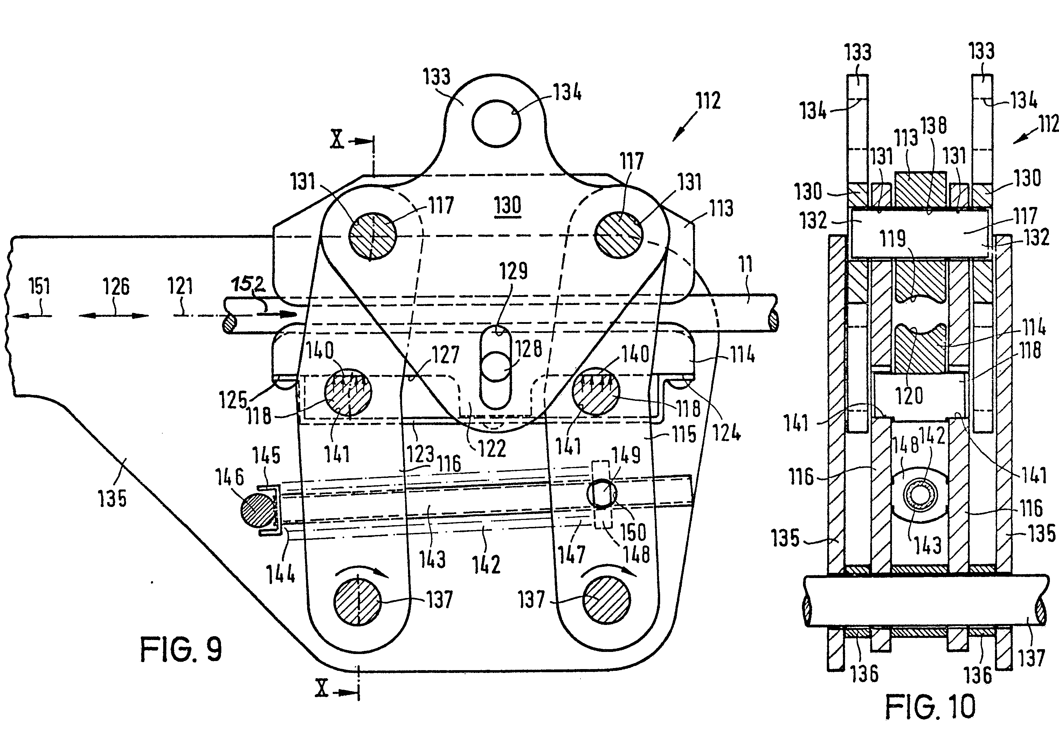

In den Fig. 9 und 10 ist eine andere Ausführungsform einer Klemmvorrichtung 112 nach der Erfindung dargestellt, die auch in Verbindung mit einem Handhebezeug verwendet werden kann, das gegenüber dem in Fig. 1 dargestellten geringfügig abgewandelt ist.

Wie aus den Fig. 9 und 10 hervorgeht, besteht die Klemmvorrichtung 112 im wesentlichen aus einer ersten Klemmbacke 113 und einer zweiten Klemmbacke 114, die mit zwei Klemmhebelpaaren 115 und 116 durch Bolzen 117 und 118 zu einem Gelenkparallelogramm verbunden sind. Beide Klemmbacken 113 und 114 haben einen im wesentlichen rechteckigen Querschnitt und je eine dem Seil zugewandte Klemmfläche 119 bzw. 120, die leicht ausgerundet ist und die das Zugmittel 11, beispielsweise ein Drahtseil oder eine Stahlstange, deren Längsachse mit 121 angegeben ist, zwischen sich einklemmen.

Die zweite Klemmbacke 114 hat in ihrem mittleren Teil einen nach unten gerichteten Fortsatz 122, auf dem ein U-förmiger Bügel 123 befestigt ist, der sich in Längsrichtung 126 im Abstand über der unteren Stützfläche 127 der zweiten Klemmbacke 114 erstreckt und mit seinen beiden Enden 124 und 125 auf der Stützfläche 127 befestigt ist.

Auf beiden Seiten der unteren Klemmbacke 114 sind Koppelzapfen 128 angeordnet, die in senkrecht zur Zugmittellängsrichtung 126 sich erstreckende Langlöcher 129 eingreifen, die sich in zwei seitlich angeordneten Laschen 130 befinden. Die Laschen 130 haben eine im wesentlichen dreieckige Form und sind mit zwei Bohrungen 131 auf die seitlich überstehenden Enden 132 der Bolzen 117 aufgesteckt, welche die erste Klemmbacke 113 mit den Klemmhebeln 115 und 116 verbinden. In ihrem oberen Teil 133 haben die Laschen 130 miteinander fluchtende Augen 134, in denen ein Rückzughebel oder eine Rückzugstange mit einem Rückzugbolzen angelenkt werden kann, wie dies weiter oben näher beschrieben wurde.

Man erkennt, daß sich die beiden Klemmbacken 113 und 114 nur quer, aber nicht längs zur Zugmittelrichtung 126 gegeneinanderbewegen können, da die in den Langlöchern 129 gleitenden Koppelzapfen 128 nur eine Querverschiebung, nicht aber eine Längsverschiebung der Klemmbacken 113 und 114 gegeneinander zulassen.

Wie aus Fig. 9 hervorgeht, sind beide Klemmhebelpaare 115 und 116 an ihren unteren Enden durch Klemmhebelbolzen 137 mit auf beiden Seiten angeordneten Schub- und Zugstangen 135 gelenkig verbunden, die durch Distanzhülsen 136 im Abstand von den Klemmhebeln 116 gehalten werden. Über die Schub- und Zugstangen 135 wird die Hebelbewegung zum Festklemmen und Ziehen des Seiles, wie weiter oben näher beschrieben, auf die Klemmvorrichtung 112 übertragen.

Während die Bolzen 117, welche die Klemmhebel 115 und 116 mit der ersten Klemmbacke 113 verbinden, in kreisrunden Bohrungen 138 der ersten Klemmbacke 113 drehbar gelagert sind, sind die Bolzen 118 als Klemmschlüssel oder Klemmbolzen ausgebildet und auf der unteren Stützfläche 127 der zweiten Klemmbacke 114 abgestützt, auf der sie sich in Zugmittellängsrichtung bewegen können. Zu diesem Zwecke ist die untere Stützfläche 127 als Gleitstützfläche ausgebildet und die Klemmbolzen 118 haben eine Abflachung 140 als Gleitfläche, mit der sie auf der Gleitstützfläche 127 der zweiten Klemmbacke 114 entlanggleiten können, während sie sich in den Lagerbohrungen 141 der Klemmhebel 115 und 116 drehen, wenn diese eine Schwenkbewegung um ihre Klemmhebelbolzen 137 ausführen.

Um in unbetätigtem Zustand einen Formschluß der Klemmbacken 113 und 114 am Zugmittel herbeizuführen, d. h. sicherzustellen, daß die Klemmflächen 119 und 120 der Klemmbacken 113 und 114 stets am Zugmittel 11 anliegen, ist eine Druckfeder 142 vorgesehen, die ein Federführungsrohr 143 umgibt und sich mit ihrem einen Ende 144 über eine Traverse 145 gegen einen Nietbolzen 146 abstützt, welcher die beiden Schub- und Zugstangen 135 miteinander verbindet. Das andere Ende 147 der Druckfeder 142 liegt an einer Federwiderlagerplatte 148 an, die mit seitlichen Fortsätzen 149 in einander gegenüberliegende Bohrungen 150 in den Klemmhebeln 115 eingreift. Hierdurch ist die Druckfeder 142 bestrebt, das Klemmhebelpaar 115 und die mit ihm über die Laschen 130 verbundenen Klemmhebel 116 im Uhrzeigersinne gegenüber den Schub- und Zugstangen 135 zu verschwenken.

Bei dieser Schwenkbewegung bewegt sich das von den beiden Klemmbacken 113 und 114 und den Klemmhebeln 115 und 116 über die Bolzen 117 und 118 gebildete Gelenkparallelogramm nach rechts, wobei sich die Bolzen 117 in den Bohrungen 131 und 138 drehen und die Klemmbolzen 118 in Zugmittellängsrichtung 126 auf den Gleitstützflächen 127 der zweiten Klemmbacke 114 entlanggleiten, während sie sich gleichzeitig in den Bohrungen 141 der Klemmhebel 115 drehen und auf die untere Gleitstützfläche 127 einen quer zur Zugmittellängsrichtung 126 gerichteten Druck ausüben. Hierdurch werden die Klemmbacken 113 und 114 gegeneinandergepreßt und klemmen das zwischen ihren Klemmflächen 119 und 120 liegende Zugmittel 11, beispielsweise ein Drahtseil oder eine Stahlstange, fest zwischen sich ein, ohne daß es hierbei in Zugmittellängsrichtung 126 gegeneinander verschieben kann.

Wenn auf der in Fig. 9 rechten Seite der Klemmvorrichtung 112 an dem zwischen den Klemmbacken 113 und 114 festgeklemmten Seil eine Last hängt und die Schub- und Zugstange 135 nach links bewegt wird, wird das Zugmittel in Richtung des Pfeiles 151 mitgenommen. Da die von den Schub- und Zugstangen 135 auf das Drahtseil od. dgl. ausgeübte Zugkraft über die Klemmhebelbolzen 137 exzentrisch eingetragen wird, ist das zwischen den Klemmbacken 113 und 114 eingeklemmte Seil bestrebt, die Klemmhebelpaare 115 und 116 um ihre Klemmhebelbolzen 137 weiterzuschwenken. Hierdurch wird das Gelenkparallelogramm weiter zusammengedrückt, und der von den Klemmflächen 119 und 120 auf das Seil ausgeübte Klemmdruck weiter erhöht. Umgekehrt bewirkt ein Zug, der in den Augen 134 der Laschen 130 angreift und in Pfeilrichtung 152 gerichtet ist, eine Spreizung des Gelenkparallelogrammes entgegen der Wirkung der Druckfeder 142, so daß sich die Klemmbacken 113 und 114 auseinanderbewegen. Die Klemmbolzen 118 stützen sich hierbei mit ihrer Unterseite an dem U-förmigen Bügel 123 ab, wobei sie die zweite Klemmbacke 114 nach unten ziehen.

Man erkennt, daß auch die Drehbolzen 117, welche die Klemmhebel 115 und 116 mit der ersten Klemmbacke 113 verbinden, als Klemmbolzen ausgebildet sein könnten. In diesem Falle werden sie ebenso wie die Klemmbolzen 118 zweckmäßig mit einer Abflachung versehen und gleiten auf einer an der ersten Klemmbacke vorzusehenden Stützfläche entlang, wenn die Klemmhebel 115 und 116 um ihre Klemmhebelbolzen 137 geschwenkt werden. Bei einer solchen Ausführung ist es zweckmäßig, wenn die Langlöcher 129 in den Laschen 130 so lang sind, daß sie auch Koppelzapfen aufnehmen können, die an den Seitenflächen der ersten Klemmbacke 113 angeordnet sind. Auch hierdurch wird erreicht, daß sich die Klemmbacken 113 und 114 nicht in Längsrichtung gegeneinander verschieben können, während alle vier Gelenkbolzen beim Klemmvorgang sich an den Klemmbacken 113 bzw. 114 verschieben.

Der Fachmann erkennt ferner, daß weder die Klemmhebel 115 und 116 noch die Laschen 130 paarweise vorhanden sein müssen, sondern daß es genügt, jeweils einen dieser Hebel und eine dieser Laschen auf einer Seite der Klemmvorrichtung vorzusehen, wenn diese Teile genügend kräftig ausgebildet werden und der Zusammenhalt der Teile auf andere Weise gesichert wird.

Änderungen und Ergänzungen sind möglich, so können beispielsweise die Druckstücke auch an den Klemmschlüsseln angeformt und so ausgebildet sein, daß sie nur Druckkräfte, aber keine Schubkräfte auf die Klemmbacken übertragen. Ferner können die Klemmschlüssel auch auf ihrer ganzen Länge gleichbleibenden Querschnitt haben oder auch teilweise kreisrund sein, wenn sich hierdurch im Einzelfall Vorteile ergeben. Außerdem ist es nicht notwendig, daß die Klemmbolzen 118 abgeflacht sind, sondern diese können auch mit ihrer Zylinderfläche auf den Gleitstützflächen 127 entlanggleiten, wenn für gute Schmierung gesorgt wird. Ferner besteht die Möglichkeit, auch die Klemmbacken der in den Fig. 2 bis 7 dargestellten Ausführungsformen durch seitlich angeordnete Laschen miteinander zu verbinden, um ihre Unverschieblichkeit in Längsrichtung gegeneinander zu sichern. Auch die Druckstücke, mit denen sich die Klemmschlüssel auf der Stützfläche der ersten Klemmbacke abstützen, können anders geformt sein, beispielsweise einen zylindrischen Querschnitt haben.

Die Klemmvorrichtung nach der Erfindung ist nicht nur bei Zug- und Hubgeräten mit durchlaufendem Seil verwendbar, sondern kann auch mit Vorteil z. B. bei Klettergeräten verwendet werden, mit denen eine Gleitschalung an Kletterstangen gehoben wird, die in bereits hergestellten Bauwerksbeton einbetoniert oder auf diesen aufgestützt sind.

**Patentansprüche**

1. Vorrichtung zum Einklemmen und/oder Längsbewegen eines langgestreckten Zugmittels (11), insbesondere eines Drahtseiles oder einer Stange, gegenüber dem Gehäuse (13) oder Rahmen eines Hebezeuges (10) od. dgl. mit mindestens einer ersten Klemmbacke (38 bzw. 113) und mit mindestens einer zweiten Klemmbacke (39 bzw. 114), die auf einander gegenüberliegenden Seiten des Zugmittels (11) angeordnet und mit mindestens einem Klemmhebel (55, 56 bzw. 115, 116) quer zur Längsrichtung (18 bzw. 126) des Zugmittels (11) gegeneinander bewegbar sind, welcher an einem Klemmschlüssel (49 bzw. 104 bzw. 118) angreift, der sich gegen Klemmbacken (39 bzw. 114) abstützt und in mindestens einer Klemmbacke (39 bzw. 114) drehbar ist, dadurch gekennzeichnet, daß der Klemmschlüssel (49 bzw. 104 bzw. 118) auf der einen Klemmbacke (38, 114) in Längsrichtung (18 bzw. 126) des Zugmittels (11) verschieblich abgestützt ist und daß die erste Klemmbacke (38 bzw. 113) und die zweite Klemmbacke (39 bzw. 114) durch Führungsmittel miteinander verbunden sind, welche eine Verschiebung der beiden Klemmbacken (38, 39 bzw. 113, 114) relativ zueinander in Längsrichtung (18 bzw. 126) des Zugmittels (11) verhindern.

2. Vorrichtung nach Anspruch 1, dadurch gekennzeichnet, daß in den Seitenflächen (43) der ersten Klemmbacke (38) quer zur Zugmittellängsrichtung (18) verlaufende Nuten (44) angeordnet sind, in welche Koppelzapfen (46) eingreifen, die in den Seitenwangen (40) der zweiten Klemmbacke (39) sitzen.

3. Vorrichtung nach einem der Ansprüche 1 oder 2, dadurch gekennzeichnet, daß der Klemmschlüssel (49 bzw. 104) auf der einen Klemmbacke (38) mit einem Druckstück (62 bzw. 106) abgestützt ist, das eine Zylinderfläche (65) und eine in Richtung der Zylindererzeugenden verlaufende ebene Fläche (66 bzw. 107) aufweist.

4. Vorrichtung nach Anspruch 3, dadurch gekennzeichnet, daß das Druckstück (106) in einer mindestens teilzylindrischen Ausnehmung (105) des Klemmschlüssels (104) drehbar gelagert und mit seiner ebenen Fläche (107) auf einer annähernd parallel zu den Klemmflächen (41, 42) verlaufenden Stützfläche (45) der einen Klemmbacke (38) gleitbeweglich abgestützt ist.

5. Vorrichtung nach Anspruch 3, dadurch gekennzeichnet, daß das Druckstück (62) mit seiner Zylinderfläche (65) in einer mindestens teilzylindrischen Ausnehmung (61) der einen Klemmbacke (38) drehbar gelagert ist und daß der Klemmschlüssel (49) mit einer Abflachung (67) auf der ebenen Fläche (66) des Druckstückes (62) gleitbeweglich abgestützt ist.

6. Vorrichtung nach einem der Ansprüche 1 bis 5, dadurch gekennzeichnt, daß in den Seitenwangen (40) der zweiten Klemmbacke (39) kreisförmige Öffnungen (48) angeordnet sind, in denen der Klemmschlüssel (49) drehbar sitzt.

7. Vorrichtung nach einem der Ansprüche 1 bis 6, dadurch gekennzeichnet, daß der Klemmschlüssel (49) mindestens auf Teilen seiner Länge den Querschnitt eines Teilzylinders hat, dessen Krümmungsradius (r) dem Radius (R) der kreisförmigen Öffnungen (48) in der zweiten Klemmbacke (39) entspricht.

8. Vorrichtung nach einem der Ansprüche 1 bis 7, dadurch gekennzeichnet, daß das Druckstück (62) in der ersten Klemmbacke (38) gegenüber dem Mittelpunkt (63) der kreisförmigen Öffnungen (48) in der zweiten Klemmbacke (39) derart in Zugmittellängsrichtung (18) versetzt gelagert ist, daß es sich teilweise außerhalb der Öffnungsränder zwischen den Seitenwangen (40) der zweiten Klemmbacke (39) befindet.

9. Vorrichtung nach einem der Ansprüche 1 bis 8, dadurch gekennzeichnet, daß der mit dem Ende (54) des Klemmschlüssels (49) undrehbar verbundene Klemmhebel (55 bzw. 56) an seiner Innenseite einen Führungszapfen (68) aufweist, der in die kreisförmige Öffnung (48) in der Seitenwange (40) der zweiten Klemmbacke (39) eingreift und bei einer Schwenkung des Klemmhebels (55 bzw. 56) am Öffnungsrand entlanggleitet.

10. Vorrichtung zum Einklemmen und/oder Längsbewegen eines langgestreckten Zugmittels (11), insbesondere eines Drahtseiles oder einer Stange, gegenüber dem Gehäuse (13) oder Rahmen eines Hebezeuges od. dgl. mit mindestens einer ersten Klemmbacke (113) und mit mindestens einer zweiten Klemmbacke (114), die auf einander gegenüberliegenden Seiten des Zugmittels (11) angeordnet und mit mindestens zwei Klemmhebeln (115, 116) durch Bolzen (117, 118) zu einem Gelenkparallelogramm verbunden und quer zur Längsrichtung des Zugmittels (11) gegeneinander bewegbar sind, dadurch gekennzeichnet, daß die beiden Klemmbacken (113, 114) dadurch in Längsrichtung (126) des Zugmittels (11) nicht gegeneinander verschiebbar sind, daß sie durch mindestens eine Lasche (130) miteinander verbunden sind, die ein quer zur Zugmittellängsrichtung (126) verlaufendes Langloch (129) aufweist, in welches ein an mindestens einer Klemmbacke angeordneter Koppelzapfen (128) eingreift, und daß mindestens die einer Klemmbacke (114) zugeordneten Bolzen (118) als Klemmbolzen ausgebildet sind, die auf mindestens einem Teil ihrer Länge eine Abflachung (140) aufweisen, mit welcher sie auf einer an der Klemmbacke (114) etwa parallel zur Klemmfläche (120) ausgebildeten Stützfläche (127) verschiebbar sind.

11. Vorrichtung nach einem der Ansprüche 1 bis 10, dadurch gekennzeichnet, daß die eine Klemmbacke (38, 114) einen Federbügel (70, 123) trägt, an dem sich die andere Klemmbacke (39) zur Erzeugung des Formschlusses der zusammenwirkenden Teile (49, 62 bzw. 104, 106 bzw. 114, 118) mittelbar oder unmittelbar abstützt.

12. Vorrichtung nach einem der Ansprüche 1 bis 11, dadurch gekennzeichnet, daß die zweite Klemmbacke (39) im Querschnitt U-förmig ist und daß die zwischen den Seitenwangen (40) der U-förmigen zweiten Klemmbacke (39) angeordnete erste Klemmbacke (38) mit dem sie in Längsrichtung überspannenden Federbügel (70) an einem Distanzstück (71) hängt, welches die freien Ränder der Seitenwangen (40) der U-förmigen zweiten Klemmbacke (39) im Abstand voneinander verbindet.

## Claims

1. Apparatus for clamping and/or moving longitudinally an elongated traction means (11), especially a wire rope or a rod, relatively to the housing (13) or frame of a hoist (10) or the like, with at least one first clamping shoe (38; 113) and with at least one second clamping shoe (39; 114), these clamping shoes being arranged, respectively, at opposite sides of the traction means (11), and being movable by means of at least one clamping lever (55, 56; 115, 116) relatively to one another transversely to the longitudinal direction (18; 126) of the traction means (11), said lever acting on a clamping key (49; 104; 118) which bears against clamping shoes (39; 114) and is rotatable in at least one clamping shoe (39; 114), characterised in that the clamping key (49; 104; 118) is supported to be displaceable in the longitudinal direction (18; 126) of the traction means (11) on one (38; 114) of the clamping shoes, and in that the first clamping shoe (38; 113) and the second clamping shoe (39; 114) are connected to one another by guide means which prevent displacement of the two clamping shoes (38, 39; 113, 114) relatively to one another in the longitudinal direction (18; 126) of the traction means (11).

2. Apparatus according to claim 1, characterised in that in the side surfaces (43) of the first clamping shoe (38) there are arranged grooves (44) which extend transversely to the longitudinal direction (18) of the traction means and into which coupling studs (46) engage which are situated in the side cheeks (40) of the second clamping shoe (39).

3. Apparatus according to claim 1 or 2, characterised in that the clamping key (49; 104) bears on one clamping shoe (38) with a pressure element (62; 106) which comprises a cylindrical surface (65) and a plane surface (66; 107) which extends in the direction of the generatrix of the cylinder.

4. Apparatus according to claim 3, characterised in that the pressure element (106) is mounted to be rotatable in an at least partly cylindrical aperture (105) of the clamping key (104), and is supported with its plane surface (107) to be slidably movable on a supporting surface (45) of one clamping shoe (38), which supporting surface extends approximately parallel to the clamping surfaces (41, 42).

5. Apparatus according to claim 3, characterised in that the pressure element (62) is mounted to be rotatable with its cylindrical surface (65) in an at least partly cylindrical aperture (61) of one clamping shoe (38), and that the clamping key (49) is supported to be slidably movable with a flat (67) on the plane surface (66) of the pressure element (62).

6. Apparatus according to one of claims 1 to 5, characterised in that in the side cheeks (40) of the second clamping shoe (39) there are arranged circular openings (48) in which the clamping key (49) is rotatably arranged.

7. Apparatus according to one of claims 1 to 6, characterised in that the clamping key (49) at least over parts of its length has the cross-section of a part-cylinder whose radius (r) of curvature corresponds to the radius (R) of the circular openings (48) in the second clamping shoe (39).

8. Apparatus according to one of claims 1 to 7, characterised in that the pressure element (62) in the first clamping shoe (38) in mounted offset in the longitudinal direction (18) of the traction means in such a manner relatively to the centre point (63) of the circular openings (48) in the second clamping shoe (39) that it is situated partly outside of the opening edges between the side cheeks (40) of the second clamping shoe (39).

9. Apparatus according to one of claims 1 to 8, characterised in that the clamping lever (55; 56) connected non-rotatably to one end surface (54) of the clamping key (49) comprises at its inner side a guide stud (68) which engages in the circular opening (48) in the side cheek (40) of the second clamping shoe (39) and, on pivoting of the clamping lever (55; 56), slides along the opening edge.

10. Apparatus for clamping and/or moving longitudinally an elongated traction means (11), especially a wire rope or a rod, relatively to the housing (13) or frame of a hoist or the like, with at least one first clamping shoe (113) and with at least one second clamping shoe (114), which are arranged at mutually opposite sides of the traction means (11) and are connected with at least two clamping levers (115, 116) by pins (117, 118) to form a parallelogram linkage, and are movable relatively to one another transversely to the longitudinal direction of the traction means (11), characterised in that the two clamping shoes (113, 114) are not displaceable relatively to one another in the longitudinal direction (126) of the traction means (11) in as much as they are connected to one another by at least one lug (130), which has a slot (129) which extends transversely to the longitudinal direction (126) of the traction means and into which engages a coupling stud (128) arranged on at least one coupling shoe (114), and that at least the pins (118) which are associated with one clamping shoe (114) are formed as clamping keys which comprise a flat (140) over at least part of their length and are supported with their flat (140) to be displaceable on a supporting surface (127) of the clamping shoe (114), which surface is situated substantially parallel to the clamping surface (120).

11. Apparatus according to one of claims 1 to 10, characterised in that one clamping shoe (38, 114) comprises a spring yoke (70, 123) on which the other clamping shoe (39) bears directly or indirectly for producing a positive connection of the co-operating parts (49, 62; 114, 118).

12. Apparatus according to one of claims 1 to 11, characterised in that the second clamping shoe (39) is U-shaped in cross-section and that the first clamping shoe (38) arranged between the side cheeks (40) of the U-shaped second clamping shoe (39), is suspended, with the spring yoke (70) spanning it longitudinally, on a spacer element (40) which connects the free edges of the side cheeks (40) off the U-shapd second clamping shoe (39) with spacing from one another.

## Revendications

1. Dispositif apte à serrer et/ou mouvoir longitudinalement un moyen de traction allongé (11), notamment un câble en acier ou une barre, relativement au carter (13) ou cadre d'un appareil de levage (10) ou semblable, avec au moins une première mâchoire de serrage (38 resp. 113) et avec au moins une seconde mâchoire de serrage (39 resp. 114) qui sont disposés de côtés réciproquement opposés du moyen de traction (11) et peuvent être mues dans des sens réciproquement opposés transversalement à l'axe longitudinal (18 resp. 126) de moyen de traction (11) moyennant au moins un levier de serrage (55, 56 resp. 115, 116), lequel actionne une clé de serrage (49 resp. 104 resp. 118) qui s'appuie contre des mâchoires de serrage (39 resp. 114) et peut pivoter en au moins une mâchoire de serrage (39 resp. 114), caractérisé en ce que la clé de serrage (49 resp. 104 resp. 118) s'appuie sur l'une mâchoire de serrage (38 resp. 114) et peut se déplacer dans la direction longitudinale (18 resp. 126) du moyen de traction (11) et en ce que la première mâchoire de serage (38 resp. 113) et la seconde mâchoire de serrage (39 resp. 114) sont réciproquement reliées par des moyens de guidage qui empêchent un déplacement réciproque des deux mâchoires de serrage (38, 39 resp. 113, 114) dans la direction longitudinale (18 resp. 126) du moyen de traction (11).

2. Dispositif selon la revendication 1, caractérisé en ce que dans les surfaces latérales (43) de la première mâchoire de serrage (38) sont disposées des entailles (44) dirigées transversalement à la direction longitudinale (18) du moyen de traction (11) dans lesquelles pénètrent des ergots d'accouplement (46) qui sont logés dans les flasques latéraux (40) de la seconde mâchoire de serrage (39).

3. Dispositif selon la revendication 1 ou 2, caractérisé en ce que la clé de serrage (49 resp. 104) est supportée par l'une mâchoire de serrage (38) moyennant une pièce de pression (62 resp. 106) qui présente une surface cylindrique (65) et une surface plane (66 resp. 107) disposée dans la direction des génératrices de la surface cylindrique.

4. Dispositif selon la revendication 3, caractérisé en ce que la pièce de pression (106) peut tourner dans une encoche au moins partiellement cylindrique (105) de la clé de serrage (104) et avec sa surface plane (107) peut glisser sur une surface portante (45) de l'une mâchoire de serrage (38), qui est dirigée presque parallèlement aux surfaces de serrage (41, 42).

5. Dispositif selon la revendication 3, caractérisé en ce que la pièce de pression (62) peut tourner avec sa surface cylindrique (65) dans une cavité au moins partiellement cylindrique (61) de l'une mâchoire de serrage (38) et que la clé de serrage (49) s'appuie et peut glisser avec une partie plane (67) sur la surface plane (66) de la pièce de pression (62).

6. Dispositif selon une des revendications 1 à 5, caractérisé en ce que dans les flasques latéraux (40) de la seconde mâchoire de serrage (39) sont disposés des ouvertures circulaires (48) dans lesquelles la clé de serrage (49) peut tourner.

7. Dispositif selon une des revendication 1 à 6, caractérisé en ce que la clé de serrage (49) a au moins sur des parties de sa longueur la section d'un cylindre partiel dont le rayon de courbure (r) correspond au rayon (R) des ouvertures circulaires (48) dans la seconde mâchoire de serrage (39).

8. Dispositif selon une des revendications 1 à 7, caractérisé en ce que la pièce de pression (62) peut tourner dans une encoche de la première mâchoire de serrage (38) qui est déplacée dans la direction longitudinale (18) du moyen de traction relativement au point moyen (63) des ouvertures circulaires (48) dans la seconde mâchoire de serrage (39) d'autant qu'elles se trouvent en partie au dehors des bords des ouvertures (48) entre les flasques latéraux (40) de la seconde mâchoire de serrage (39).

9. Dispositif selon une des revendications 1 à 8, caractérisé en ce que le levier de serrage (55 resp. 56) qui est monté sur l'extrémité (54) de la clé de serrage (49) de telle façon qu'il ne peut pas pivoter relativement à celle-ci, est pourvu de son côté intérieur d'un ergot de guidage (68) qui pénètre dans l'ouverture circulaire (48) dans le côté latéral (40) de la seconde mâchoire de serrage (39) et, par un pivotement du levier de serrage (55 resp. 56), glisse le long du bord de l'ouverture.

10. Dispositif apte à serrer et/ou mouvoir longitudinalement un moyen de traction allongé (11), notamment un câble ou une barre, relativement au carter (13) ou cadre d'un appareil de levage ou semblable avec au moins une première mâchoire de serrage (113) et avec au moins une seconde mâchoire de serrage (114) qui sont disposées de côtés réciproquement opposés du moyen de traction (11) et reliées avec au moins deux leviers de serrage (115, 116) moyennant des pivots (117, 118) pour former un parallélogramme articulé et peuvent être mues transversalement à l'axe longitudinal du moyen de traction (11) dans des sens réciproquement opposés, caractérisé en ce que les deux mâchoires de serrage (113, 114) ne peuvent pas se déplacer réciproquement dans la direction longitudinale (126) du moyen de traction (11) du fait qu'elles sont accouplées l'une à l'autre moyennant au moins une pièce d'accouplement (130) qui présente un trou oblong (129) disposé transversalement à la direction longitudinale (126) du moyen de traction, dans lequel pénètre un ergot d'accouplement (128) monté sur au moins une mâchoire de serrage, et qu'au moins les pivots (118) relatifs à une mâchoire de serrage (114) sont formés comme des pivots de serrage qui présentent sur au moins une partie de leur longueur une partie plane (140) avec laquelle ils peuvent glisser sur une surface portante (127) aménagée sur la mâchoire de serrage (114) presque parallèlement à la surface de serrage (120).

11. Dispositif selon une des revendications 1 à 10, caractérisé en ce que l'une mâchoire de serrage (38, 114) porte un étrier élastique (70, 123) auquel l'autre mâchoire de serrage (39) s'appuie directement ou indirectement pour assurer le contact entre les parties coopérantes (49, 62 resp. 114, 118).

12. Dispositif selon une des revendications 1 à 11, caractérisé en ce que la seconde mâchoire de serrage (39) a une section en U et que la première mâchoire de serrage (38) qui est disposée entre les flasques latéraux (40) de la seconde mâchoire de serrage en U, est suspendue avec l'étrier élastique (70), qui est situé longitudinalement au-dessus d'elle à une entretoise (71) qui connecte et maintient à une distance déterminée les extrémités libres des flasques latéraux (40) de la seconde mâchoire de serrage en U (39).

FIG. 1

0 064 571

FIG. 2

FIG. 3

0 064 571

FIG. 4

FIG. 5

FIG. 8

FIG. 6

FIG. 7

0 064 571

FIG. 10

FIG. 9